# EUROPÄISCHE PATENTSCHRIFT

(11) **EP 2 561 241 B1**
(45) Veröffentlichungstag und Bekanntmachung des Hinweises auf die Patenterteilung: **26.08.2015**
(21) Anmeldenummer: 11722302.4
(22) Anmeldetag: 26.04.2011
(51) Int. Cl.: F16C 33/78

(54) **DICHTUNGSANORDNUNG FÜR WÄLZLAGER**
SEALING ASSEMBLY FOR A ROLLING BEARING
ENSEMBLE D'ÉTANCHÉITÉ POUR PALIER À ROULEMENT

(30) Priorität: 23.04.2010 DE 102010018255
(43) Veröffentlichungstag der Anmeldung: 27.02.2013
(73) Patentinhaber: IMO Holding GmbH, 91350 Gremsdorf (DE)
(72) Erfinder: FRANK, Hubertus, 91315 Höchstadt (DE); RUSS, Erich, 91350 Gremsdorf (DE); SCHRÖPPEL, Werner, 90530 Wendelstein (DE)
(74) Vertreter: Küchler, Stefan
(86) Internationale Anmeldenummer: PCT/EP2011/002077
(87) Internationale Veröffentlichungsnummer: WO 2011/141125

(56) Entgegenhaltungen:
- DE-A1-102007 049 087
- DE-T2- 60 120 876
- US-A1- 2009 036 006

## Beschreibung

Die Erfindung richtet sich auf eine Dichtungsanordnung für eine Drehverbindung, insbesondere für ein Wälzlager mit zwei zueinander konzentrischen Ringen, welche durch einen rundumlaufenden Spalt voneinander beabstandet sind, in welchem eine oder mehrere Reihen von umlaufenden Wälzkörpern angeordnet sind, so dass die beiden Ringe um ihre gemeinsame Achse gegeneinander verdrehbar sind, und wobei der Spalt im Bereich wenigstens einer seiner beiden Mündungen abgedichtet ist.

Der Einsatzbereich für Drehverbindungen im Allgemeinen, aber auch für Wälzlager im Besonderen, ist unübersehbar. Gattungsgemäße Drehverbindungen, insbesondere Wälzlager, sind sehr häufig mit Fett geschmiert, seltener mit Öl. Das Schmiermittel wird durch vorzugsweise beidseitige Abdichtungen im Bereich der (Wälz-) Lagerung zurückgehalten. Als Dichtungen werden häufig einzelne Wellendichtringe verwendet, die mit zusätzlichen Halteringen fixiert oder direkt mit der Anschlußkonstruktion durch die Befestigungsschrauben verpreßt werden.

Besonders In Windkraftanlagen kommen derartige Lagerungen immer häufiger auch als Rotorlagerungen zum Einsatz. Speziell bei getriebelosen Windkraftanlagen wird diese Bauform oft präferiert, da sie günstig und platzsparend ist.

Durch die kompakte Bauweise der Windkraftanlagen ist es nicht immer möglich, diese Dichtringe im eingebauten Zustand auszutauschen. Um einen Austausch zu bewerkstelligen, ist es häufig notwendig, den Generator oder die Nabe mit den Blättern abzubauen. Die damit verbundenen Ausbau- und Ausfallkosten sind extrem hoch. Besonders hohe Kosten sind bei Windkraftanlagen zu erwarten, die in sehr schwer zugänglichen Gebieten oder gar Offshore stehen, d.h. weit von der Küste entfernt im Meer, wo für derartige Arbeiten Spezialschiffe erforderlich sind.

Darüber hinaus läßt sich der Zustand einer Dichtung durch die oftmals sehr schlechte Zugänglichkeit nur schwer einschätzen und beurteilen. Da ein derartiges, oft mehrere Tonnen schweres Rotorlager noch mit dem Generator sowie ggf. mit weiteren Teilen der Anschlußkonstruktion verbunden ist bzw. wird, können bspw. bei Installations-, Wartungs- oder Reparaturarbeiten Verschmutzungen im Bereich der Dichtung nicht immer ausgeschlossen werden, welche die Dichtlippe beschädigen und damit die gesamte Dichtwirkung beeinträchtigen können.

Die DE 10 2007 049 087 A1 zeigt ein radial und axial belastbares Wälzlager mit einer gattungsgemäßen Dichtungsanordnung.

Aus den Nachteilen des beschriebenen Standes der Technik resultiert das die Erfindung initiierende Problem, eine gattungsgemäße Dichtungsanordnung derart weiterzubilden, dass die Dichtwirkung möglichst optimal ist, wobei vor allem eine erhöhte Zuverlässigkeit auch unter schwierigen Umgebungsbedingungen gewährleistet sein soll. Ferner soll die Wartung erleichtert werden und nach Möglichkeit soll auch ein Ersatz einer derartigen Dichtung möglich sein, ohne die betreffende Lagerung oder Teile derselben ausbauen zu müssen.

Die Lösung dieses Problems gelingt dadurch, dass im Bereich einer Spaltdichtung wenigstens zwei voneinander getrennte Dichtringe vorgesehen sind, mit wenigstens je einer Dichtlippe und je einem Verankerungsabschnitt an einem der Dichtlippe abgewandten Oberflächenbereich des betreffenden Dichtrings, wobei die Dichtringe mit ihren Verankerungsabschnitten an einem gemeinsamen Abschnitt des gleichen Wälzlagerrings festgelegt sind, während ihre Dichtlippen jeweils an dem anderen Wälzlagerring anliegen, nämlich an Anlaufflächen, die zusammen mit wenigstens einer Laufbahn des betreffenden Wälzlagerrings durch Bearbeiten oder Formgebung eines gemeinsamen Grundkörpers hergestellt ist, wobei die Querschnittsverläufe der Anlaufflächen für die Dichtlippen benachbarter Dichtringe gleich oder ähnlich sind sowie weder durch einen Knick noch durch eine Stufe voneinander getrennt.

Durch die einander entsprechenden Oberflächenbereiche können mehrere gleichartige Dichtringe verwendet und auf einfache Weise eingebaut und ggf. auch ausgetauscht werden. Denn der tiefer im Inneren des Lagerspaltes angeordnete Dichtring kann dabei bequem über die Anlauffläche des äußeren Dichtrings hinweg geschoben werden, ohne dass dabei Beschädigungen zu befürchten sind. In diesem Zusammenhang soll die Formulierung "ähnliche Querschnitte" auf die prinzipielle Geometrie der betreffenden Anlauffläche bezogen werden, d.h. entweder sind beide Anlaufflächen zylindrisch oder beide sind hohlzylindrisch, oder sie sind beide konisch oder eben. Dabei kann - unabhängig von dieser allgemeinen Geometrie - noch eine Wölbung quer zu der betreffenden Anlauffläche vorhanden sein; dies wird jedoch weiter unten noch ausführlicher beschrieben. Indem die Querschnittsverläufe der Anlaufflächen für die Dichtlippen benachbarter Dichtringe nicht durch einen Knick oder eine Stufe voneinander getrennt sind, wird das Auf- bzw. Einlegen eines oder beider Dichtungsringe erheblich erleichtert. Eine erfindungsgemäß abgedichtete Wälzlagerung kann ohne weitere Ummantelung sogar im Freien betrieben werden und ist dennoch vor den Unbilden der Witterung stets ausreichend geschützt.

Besondere Vorzüge bietet eine konstruktive Weiterbildung dahingehend, dass die Verankerungsbereiche zweier benachbarter Dichtungsringe in einer gemeinsamen Vertiefung eines Wälzlagerrings aufgenommen sind, insbesondere in einer gemeinsamen Auskehlung oder Nut. Eine solche gemeinsame Vertiefung ist einfacher herzustellen als mehrere, voneinander getrennte Nuten; auch lassen sich die Dichtungsringe darin einfacher einlegen.

Dabei läßt sich die Anordnung dahingehend treffen, dass ein die gemeinsame Vertiefung, insbesondere Auskehlung oder Nut, aufweisender Aufnahmeabschnitt eines Wälzlagerrings von dem Hauptabschnitt des betreffenden Wälzlagerrings lösbar ist. Dies hat den besonderen Vorteil, dass zum Lösen eines Dichtrings zunächst ein denselben zumindest bereichsweise umgebender Lagerabschnitt entfernt werden kann, so dass die Dichtung selbst leichter zugänglich ist. Dabei kann ein derartiger, lösbarer Abschnitt eines Lagerrings wahlweise einstückig ausgebildet sein, also als rundum in sich geschlossener, also zweifach zusammenhängender Ring, der nur in axialer Richtung abgezogen oder zumindest verschoben werde kann, um an die Dichtungen zu gelangen, oder es handelt sich dabei m ein aus mehreren Segmenten zusammengesetztes Teil, wobei die einzelnen Segmente die Drehachse jeweils nicht vollständig umgeben. Solchenfalls können diese Segmente nicht nur in axialer Richtung verschoben, sonder auch in radialer Richtung bewegt werden, bspw. vollständig ausgebaut werden, ohne den betreffenden Lagerring dazu ausbauen zu müssen. Bei beiden Ausführungsformen kann im Bereich der Teilungsfuge zwischen dem Hauptabschnitt des betreffenden Lagerrings und dem davon lösbaren Abschnitt eine spezielle Geometrie zur selbsttätigen Zentrierung des lösbaren Abschnitts bei dessen Anbau vorgesehen sein. Es kann sich hierbei z.B. um eine rndumlaufende Abstufung bzw. Auskehlung an einem Abschnitt handeln, wobei das dazu komplementäre Pendant an dem jeweils anderen Abschnitt angeformt ist.

Es liegt im Rahmen der Erfindung, dass die gemeinsame Vertiefung, insbesondere Nut oder Auskehlung, an einem ringförmigen Aufnahmeabschnitt angeordnet ist, der selbst keinerlei Laufbahn aufweist, jedoch an einem ringförmigen Hauptabschnitt des betreffenden Wälzlagerrings festgelegt ist, welcher seinerseits wenigstens eine Laufbahn aufweist, die durch Bearbeiten oder Formgebung eines gemeinsamen Grundkörpers hergestellt ist. Dadurch besteht die Möglichkeit, Zugang zu den entsprechenden Dichtringen zu erhalten, ohne dazu die Wälzkörper freilegen zu müssen.

Die Erfindung bietet die weitere Möglichkeit, dass der von dem Hauptabschnitt eines Wälzlagerrings lösbare Aufnahmeabschnitt aus einem anderen und/oder aus einem anders behandelten Werkstoff besteht wie der Hauptabschnitt des betreffenden Wälzlagerrings. In diesem Zusammenhang ist zu bedenken, dass der die Lagerlaufbahnen aufweisende Hauptabschnitt des betreffenden Rings aus Gründen einer ausreichenden Betriebsdauer vorzugsweise aus einem teuren, besonders harten oder jedenfalls härtbaren Lagerwerkstoff angefertigt ist, bspw. aus einem Spezialstahl. Einem solchen Erfordernis unterliegt der ablösbare Ringabschnitt, welcher nur die Dichtringe halten muß, normalerweise nicht. Daher kann zur Reduzierung der Kosten einer derartigen Drehverbindung hierfür ein anderes Material verwendet werden, bspw. Messing, und/oder das betreffende Material wird jedenfalls keinem Härtungsschritt unterzogen, wie bei ungehärtetem Stahl.

Die Erfindung empfiehlt, dass der von dem Hauptabschnitt eines Wälzlagerrings lösbare Aufnahmeabschnitt einen etwa L-förmigen Querschnitt aufweist, dessen den Wälzkörpern zugewandte Stirnseite flächenmäßig kleiner ist als seine den Wälzkörpern abgewandte Stirnseite. Ein Ring mit einer L-förmigen Geometrie erlaubt es nicht nur, die betreffenden Dichtringe in radialer Richtung zu zentrieren, sondern gleichzeitig auch, diese in axialer Richtung festzuklemmen. Dabei wird ein leichtes Lösen dadurch ermöglicht, dass die flächenmäßig kleinere Stirnseite den Wälzkörpern zugewandt ist und bei Bedarf also über die Dichtringe hinweg abgezogen werden kann.

Die Erfindung läßt sich dahingehend weiterbilden, dass der von dem Hauptabschnitt eines Wälzlagerrings lösbare Aufnahmeabschnitt im Bereich seiner den Wälzkörpern abgewandten Stirnseite einen die Stirnseite eines Dichtrings übergreifenden, kreisscheibenförmigen Abschnitt aufweist. Dieser größeren Stirnfläche des querschnittlich L-förmigen Aufnahmerings obliegt es, den übergriffenen Dichtring sowie unmittelbar an diesen angrenzende, weitere Dichtringe fest an einen Abschnitt der Stirnseite des die Wälzkörperlaufbahnen aufweisenden Wälzlagerrings selbst zu pressen.

Die Verankerungsbereiche zweier benachbarter Dichtungsringe sollten voneinander beabstandet sein, damit die dazwischen liegende Kammer ein möglichst großes Volumen aufweist und daher einem ggf. leckenden Schmiermittel einen ausreichenden Aufnahmeraum bieten kann, bevor dieses auch an dem äußeren Dichtring ansteht.

Das soeben beschriebene Merkmal läßt sich auf besonders einfache Weise dadurch realisieren, dass die Verankerungsbereiche zweier benachbarter Dichtungsringe durch ein oder mehrere, dazwischen angeordnete Distanzteile voneinander getrennt sind. Solche Distanzteile sorgen für eine besonders stabile Lage der davon getrennten Dichtringe und können auch axialen Druck aufnehmen, so dass die Verankerungsbereiche der Dichtringe zusätzlich eingeklemmt werden können.

Obzwar die Distanzeile auch mit dem betreffenden Lagerring verbunden sein können, also bspw. in Form von an den betreffenden Oberflächenbereichen hervortretenden Stegen, ist in Weiterverfolgung des obigen Erfindungsgedankens jedoch vorgesehen, dass wenigstens ein Distanzteil als Ring oder Ringsegment ausgebildet ist. Es handelt sich hierbei um lösbare Teile, welche bei Bedarf ersetzt oder gar durch Teile mit einer anderen Geometrie ausgetauscht werden können, falls für die angrenzenden Dichtungen Dichtungsringe mit einer anderen Geometrie verwendet werden sollen. Ringsegmente können insbesondere auch nachträglich in nutförmige Vertiefungen an konkaven Oberflächenbereichen eines Lagerrings eingesetzt werden.

Weiterhin ist vorgesehen, dass die Dichtlippen benachbarter Dichtringe an dem selben Wälzlagerring unter einem gegenseitigen Abstand anliegen. Dieser Abstand ist vorzugsweise entlang des gesamten Umfangs etwa konstant. Sofern ein Dichtring entlang einer Ebene verläuft, die lotrecht von der Drehachse der betreffenden Drehverbindung durchsetzt ist, gleitet die Dichtlippe nur in ihrer Längsrichtung an der betreffenden Anlauffläche entlang, wodurch die Reibung minimiert wird. Solchenfalls ist der Abstand zwischen zwei benachbarten Dichtlippen ebenfalls parallel zur Drehachse der betreffenden Drehverbindung zu messen. Durch diesen Abstand zwischen den beiden Dichtlippen ergibt sich eine Kammer zwischen den beiden Dichtungsringen. Diese Kammer dient zur Aufnahme derjenigen Schmiermittelmenge, welche den inneren Dichtring überwunden hat. Da eine solche Leckage an dem inneren Dichtring vorbei - wenn überhaupt - relativ langsam vonstatten geht, füllt sich diese Kammer nur allmählich mit dem Schmiermittel an, und dementsprechend kann der äußere Dichtring das Schmiermittel über einen relativ großen Zeitraum hinweg komplett zurückhalten.

Die Erfindung läßt sich dahingehend weiterbilden, dass zwischen zwei benachbarten Dichtringen, innerhalb der gemeinsamen Vertiefung oder zwischen den beiden Anlaufflächen-Bereichen für die Dichtlippen benachbarter Dichtringe wenigstens ein Kanal mündet, vorzugsweise eine Bohrung. Solchenfalls kann durch diesen Kanal bspw. der Füllzustand der Kammer zwischen den beiden Dichtringen überprüft werden, um zu erkennen, ob ein Handlungsbedarf besteht, bspw. nachzuschmieren oder die Dichtung zu erneuern. Darüber hinaus besteht auch die Möglichkeit - gerade bei einer Ölschmierung - durch einen solchen Kanal das an dem inneren Dichtring vorbei gelangte Schmiermittel wieder in den Spaltbereich zurückzuführen, bspw. automatisch unter Wirkung der Schwerkraft oder manuell im Rahmen einer Wartung. Damit das Schmiermittel nicht umgekehrt durch diesen Kanal von dem Spaltinneren an der inneren Dichtung vorbei in die Kammer gelangen kann, kann in einen solchen Kanal (bzw. in jeden solchen Kanal) ein Rückschlagventil eingebaut sein, welches nur eine Strömung in Richtung von der Kammer zwischen beiden Dichtringen hin zu dem Spaltinneren zuläßt, bei umgekehrten Druckverhältnissen jedoch sperrt.

Zwei benachbarte Dichtringe sollten beide derart eingebaut sein, dass ein innerer Überdruck von der Mitte des Spalts in Richtung zu dessen Mündung die Dichtlippe zusätzlich an ihre Anlauffläche preßt. Eine solche Maßnahme erlaubt und fördert das vollständige Befüllen des Lagerspalts mit Schmiermittel, wobei zeitweise ein lokaler Überdruck entstehen könnte; dieser führt jedoch nicht zu einer Leckage, sondern preßt die Dichtlippe besonders fest an die Anlauffläche, bis sich der lokale Überdruck durch eine interne Ausgleichsbewegung des Schmiermittels abgebaut hat.

Eine bevorzugte Ausführungsform der Erfindung zeichnet sich dadurch aus, dass der rückwärtige Verankerungsbereich eines Dichtrings in einer parallel zum Querschnitt der Anlauffläche verlaufenden Richtung erheblich dicker ist als der an die Dichtlippe angrenzende Teil des Dichtrings. Dabei obliegt es dem verdickten Verankerungsbereich, dem Dichtring eine ausreichende Stabilität zu verleihen, während die vordere Dichtlippe besonders elastisch ist, um stets der Anlauffläche folgen zu können, selbst wenn sich das Lager - bspw. unter dem Einfluß äußerer Kräfte und/oder Momente, insbesondere Kippmomente, star verformt.

Diesem Zweck ebenfalls förderlich ist eine Weiterbildung dahingehend, dass die Dichtlippe eines Dichtrings an der freien Kante eines etwa kragenartigen, vorzugsweise konischen Abschnitts des Dichtrings angeordnet ist. Vorzugsweise hat dieser kragenartige Abschnitt eine geringere Dicke und damit eine höhere Elastizität als der verdickte Verankerungsbereich und erlaubt es daher der Dichtlippe, sich relativ zu dem Verankerungsbereich - in gewissen Grenzen - zu bewegen.

Ein erfindungsgemäßer Dichtring kann derart eingebaut sein, dass der kragenartige Abschnitt des Dichtrings querschnittlich nicht lotrecht zu der betreffenden Anlauffläche verläuft, sondern dem äußeren, nicht abgedichteten Bereich der Anlauffläche angenähert verläuft. Dadurch ergibt sich insbesondere auch an der jeweiligen Innenseite des Dichtungsrings - also der dem betreffenden Spaltinneren zugewandten Oberfläche - ein etwa zu der betreffenden Anlauffläche paralleler oder zumindest etwa paralleler Querschnittsverlauf, welcher einen inneren Schmiermitteldruck aufnehmen kann und dadurch den betreffenden Dichtungskragen samt der daran befindlichen Dichtlippe gegen die betreffende Anlauffläche preßt.

Der kragenartige Abschnitt eines Dichtrings ist vorzugsweise mit dessen Verankerungsabschnitt verbunden, und zwar im Bereich der außerhalb des abgedichteten Spaltbereichs liegenden Stirnfläche dieses Verankerungsabschnitts. Diese einteilige Ausführungsform ist geometrisch optimiert und vereint größtmögliche Stabilität mit optimaler Dichtwirkung.

Darüber hinaus liegt es im Rahmen der Erfindung, dass wenigstens ein Dichtring ein Spannmittel aufweist, bspw. einen rundumlaufenden Spanndraht, um die betreffende Dichtlippe fest an die betreffende Anlauffläche zu pressen. Dadurch läßt sich der Anpreßdruck einer Dichtlippe gegen deren Anlauffläche weiter erhöhen, um die Dichtwirkung bei Bedarf noch weiter zu steigern. Ein solcher Spanndraht kann bspw. zu einer spiralförmigen Feder aufgerollt sein, welche den betreffenden Dichtring einmal komplett umläuft.

Eine derartige, rundum laufende Spannfeder sollte eine Länge aufweisen, die gleich oder größer ist als der Durchmesser eines Wälzkörpers, multipliziert mit der Anzahl der Wälzkörper in der betreffenden Reihe. Eine solche Bemessung stellt sicher, dass die Spannfeder eine möglichst hohe Anpreßkraft erzeugt, dabei aber nicht überdehnt wird, sondern sich im elastischen Federbereich bewegt.

Es hat sich bewährt, dass zwei benachbarte Dichtringe die selbe Querschnittsstruktur aufweisen. Die verwendeten Dichtringe könnten - trotz gleicher Struktur - noch unterschiedliche Querschnittsgrößen oder - größenverhältnisse aufweisen. Es wird jedoch empfohlen, dass zwei benachbarte Dichtringe identisch sind. Ist eine optimale Querschnittsgeometrie gefunden, so kann dieselbe für beide bzw. alle Dichtringe genutzt werden.

Es liegt im Rahmen der Erfindung, dass die Querschnittsverläufe der Anlaufflächen für die Dichtlippen benachbarter Dichtringe einander entsprechende Querwölbungen aufweisen, also jeweils eine konkave Querwölbung aufweisen oder beide eine konvexe Querwölbung, oder jeweils einen flachen, d.h. ebenen Querverlauf ohne jegliche Querwölbung. Auch eine solchermaßen zumindest strukturell gleiche Querwölbung - auch wenn der Querwölbungsradius sich eventuell ändert - wirkt begünstigend auf das Einlegen der Dichtringe.

Weitere Vorzüge ergeben sich dadurch, dass die Querschnittsverläufe der Anlaufflächen für die Dichtlippen benachbarter Dichtringe die selbe axiale Steigung aufweisen, insbesondere in einer gemeinsamen axialen Flucht liegen. Dieses Merkmal bezweckt ebenfalls das möglichst problemlose Handhaben des bzw. der Dichtungsringe.

Indem die Dichtlippen zweier benachbarter Dichtringe an einem gemeinsamen, zylindrischen Oberflächenbereich anliegen oder anlaufen, der einen konstanten Durchmesser aufweist, müssen die Dichtringe beim Einlegen weder gedehnt noch sonstwie verformt werden und sind also nicht der Gefahr einer Beschädigung ausgesetzt.

Schließlich entspricht es der Lehre der Erfindung, dass eine äußere Dichtung mit einer Staublippe versehen ist. Damit kann der Gefahr des Eindringens von Staub oder anderen Partikeln wirksam begegnet werden. Es kann sich hierbei um einen zusätzlichen Dichtring handeln, der einen anderen Querschnitt haben kann als die übrigen Dichtringe der betreffenden Spaltdichtung. Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt durch die ein mit einer erfindungsgemäßen Abdichtung versehenes Wälzlager; sowie
- Fig. 2: das Detail II aus Fig. 1 in einer vergrößerten Darstellung.

In der Zeichnung ist beispielhaft eine bevorzugte Verwendung des erfindungsgemäßen Dichtungsprinzips wiedergegeben. Es handelt sich um ein Wälzlager 1, welches bevorzugt für eine Windkraftanlage eingesetzt werden soll, insbesondere als Rotor- oder Hauptlager.

Man erkennt zwei zueinander konzentrische Lagerringe, einen Innenring 2 von ebener, kreisförmiger Gestalt, sowie einen denselben außen umgreifenden Außenring 3 mit einer entsprechenden Geometrie. Bevorzugt haben beide Ringe 2, 3 jeweils ebene Stirnseiten 4, 5, welche als Anschlußflächen zum Anschluß an ein Fundament oder ein Anlagen- oder Maschinenteil dienen können. Zu diesem Zweck ist in wenigstens je einer Stirnseite 4, 5 pro Lagerring 2, 3 eine Mehrzahl von kranzförmig angeordneten Befestigungsmitteln, insbesondere Befestigungsbohrungen 6 zum Hindurchstecken oder Einschrauben von Maschinenschrauben, (Gewinde-) Bolzen od. dgl. vorgesehen, deren Längsachsen die betreffende Stirnseite 4, 5 vorzugsweise lotrecht durchsetzen.

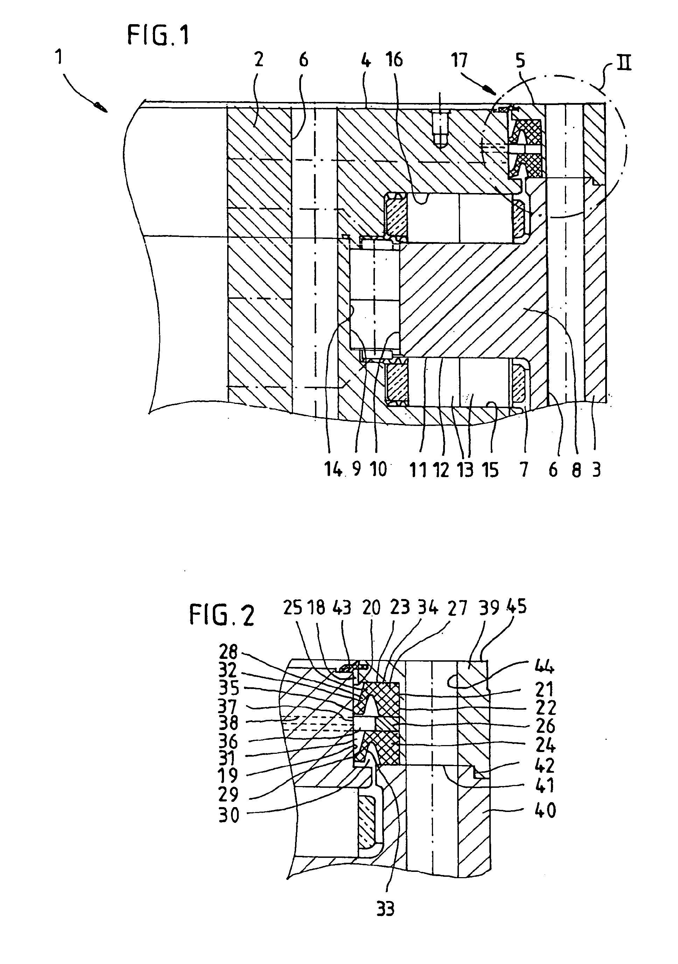

Zwischen den beiden Lagerringen 2, 3 gibt es einen Spalt 7, so dass sich dieselben gegeneinander verdrehen können. Wie aus Fig. 1 ersichtlich ist, hat dieser Spalt jedoch keinen geraden Querschnitt, sondern einen mehrfach abknickenden Verlauf.

Dies rührt daher, dass an der Innenseite des Außenrings 3 ein rundumlaufender Bund 8 angeordnet ist, vorzugsweise mit einem etwa rechteckigen Querschnitt. Im Fachjargon wird ein derartiger Bund 8 als Nase bezeichnet und der betreffende Ring - hier der Außenring 3 - als Nasenring.

Gleichzeitig hat der andere Ring - hier der Innenring 2 - eine ähnlich geformte, rundumlaufende Vertiefung 9 mit einem größeren Querschnitt als der Bund 8 bzw. die Nase, so dass letztere(r) von der rundumlaufenden Vertiefung 9 größtenteils aufgenommen werden kann.

An den Kanten im Bereich der freien Stirnseite 10 des Bundes 8 bzw. der Nase wie auch in den Auskehlungen am Grund des/der letzteren knickt der Spalt 7 querschnittlich jeweils um etwa 90° ab.

Die freie Stirnseite 10 des Bundes 8 wie auch dessen beiden Flanken 11 dienen jeweils als Laufbahnen 12 für rollenförmige Wälzkörper 13. Die Gegenstücke zu diesen Laufbahnen 12 befinden sich am Grund 14 und an den beiden Flanken 15 der Vertiefung 9 des Innenrings 2, in Form dortiger Laufbahnen 16. Vorzugsweise sind diese Laufbahnen gehärtet, vorzugsweise durch Oberflächenhärtung.

Derartige Rollen 13 können extrem hohe Kräfte und Kippmomente aufnehmen bzw. übertragen und erreichen dabei deutlich größere Werte als bspw. Kugeln, da sie nicht punktförmige, sondern linienförmige Kontaktbereiche zu den Laufbahnen 12, 16 ausbilden. Um jedoch leichtgängig abrollen zu können, ist eine gute Schmierung der Wälzkörper 13 erforderlich, bevorzugt mit Schmierfett; nur in eher seltenen Fällen kommt dabei Schmieröl zum Einsatz.

Dieses Schmiermittel muß dauerhaft im Bereich der Wälzkörper 13 - also im Inneren des Spaltes 7 - zurückgehalten werden. Dies leisten Dichtungen 17 im Bereich der beiden stirnseitigen Mündungen 18 des Spaltes 7. Dabei werden im dargestellten Beispiel an beiden Mündungen 18 die selben Dichtungen 17 verwendet, so dass nur eine von beiden erläutert werden muß. Die Details der Dichtungen 17 sind in Fig. 2 größer dargestellt und daher besser zu erkennen:

In einem Mündungsabschnitt 18 des Spalts 7 folgt die Außenseite 19 des Innenrings 2 einem zylindrischen Verlauf. Diesem gegenüberliegend ist in der Innenseite 20 des Außenrings 3 eine nutförmige Vertiefung 21 eingearbeitet, vorzugsweise mit einem hohlzylindrischen Grund 22 und zwei ebenen Flanken 23, so dass der Querschnitt durch ein Rechteck beschrieben werden kann.

In dieser Vertiefung 21 sind zwei Dichtringe 24, 25 sowie ein ebenfalls ringförmiges Distanzelement 26 eingelegt, und zwar in axialer Richtung parallel zu der Drehachse des Wälzlagers 1 hintereinander, wobei sich das Distanzelement 26 zwischen den beiden Dichtringen 24, 25 befindet.

Wie man der Zeichnung entnehmen kann, sind beide Dichtringe 24, 25 im dargestellten Ausführungsbeispiel identisch. Beide haben daher gleiche Querschnitte mit jeweils drei Abschnitten, nämlich einem Verankerungsabschnitt 27, einem damit verbundenen, kragenförmigen Abschnitt 28 und einer Dichtlippe 29, welche entlang der freien Kante des kragenförmigen Abschnitts 28 verläuft.

Man kann sich diese Querschnittsgeometrie dadurch entstanden vorstellen, dass in einem Ring mit rechteckigem Querschnitt zwei entlang dessen gesamter Länge entlanglaufende Einschnitte eingebracht sind. Ein erster Einschnitt 30 trennt den Verankerungsabschnitt 27 einerseits von dem kragenförmigen Abschnitt 28 und der Dichtlippe 29 andererseits. Dieser Einschnitt 30 hat einen etwa V-förmigen Querschnitt mit einer Tiefe, die nur wenig kleiner ist als die zur Lagerachse parallele Dicke des betreffenden Dichtrings 24, 25. Da der Einschnitt 30 ist zur Dichtlippe 29 hin verlagert ist, nimmt der Verankerungsabschnitt 27 etwa den halben Querschnitt des ursprünglich rechteckigen Ringquerschnitts ein. Direkt neben dem Einschnitt 30 - dem Verankerungsabschnitt 27 abgewandt - endet der kragenförmige Abschnitt 28 in einer Dichtlippe 29.

Der zweite Einschnitt 31 befindet sich an der gegenüber liegenden Oberfläche des kragenförmigen Abschnitts 28. Er hat nur etwa den halben Querschnitt des ersten Einschnitts 30 und sein Querschnitt folgt etwa der Geometrie eines rechteckigen Dreiecks, dessen Hypothenuse 32 etwa parallel zu der nächstgelegenen Flanke 33 des ersten, V-förmigen Einschnitts 30 verläuft. Der Abstand zwischen dieser Hypothenuse 32 und der nächstgelegenen Flanke 33 des ersten, V-förmigen Einschnitts 30 entspricht der Stärke des kragenförmigen Dichtungsabschnitts 28.

Beide Dichtringe 24, 25 sind derart in die Vertiefung 21 eingelegt, dass die kragenförmigen Abschnitte 28 jeweils im Bereich der peripheren Stirnseite 34 des Dichtrings 24, 25 mit dessen Verankerungsabschnitt 27 verbunden sind, während sich die kragenförmigen Bereiche 28 von dort entlang einer schrägen Linie zum Inneren des Spalts 7 hin erstrecken, so sodann die Dichtlippe 29 sitzt, die an einem als Anlauffläche dienenden, zylindrischen Oberflächenbereich 35 des Innenrings 2 anliegt. Infolge des sich vom Fußpunkt des kragenförmigen Bereichs 28 im Bereich des Verankerungsabschnitts 27 bis zu der Dichtlippe 29 hin V-förmig erweiternden Einschnitts 30, welcher dem Spaltinneren 7 zugewandt ist, führt ein innerer Überdruck im Bereich des Spaltinneren 7 zu einem vermehrten Druck auf den kragenförmigen Abschnitt 28 im Bereich des Einschnitts 30, wodurch eine Kraft erzeugt wird, die den kragenförmigen Abschnitt 28 und damit dessen Dichtlippe 29 in Richtung zu der Anlauffläche 35 preßt, so dass kaum Schmiermittel entweichen kann. Um diese Anpreßkraft weiter zu erhöhen, könnte zusätzlich noch eine Feder verwendet werden, als bspw. ein Spanndraht, der an der der Dichtlippe 29 abgewandten Seite des kragenförmigen Abschnitts 28 entlangläuft und vorgespannt ist.

Falls dies doch geschieht, so gelangt das Schmiermittel allenfalls bis in eine Kammer 36, die zwischen dem Oberflächenbereich 35 und den beiden Dichtringen 24, 25 sowie dem Distanzelement 26 gebildet wird. Das Distanzelement 26 dient der Vergrößerung dieser Kammer 36. Es kann entweder aus einem einzigen Stück mit einer ringförmigen Geometrie dabei bestehen, der entweder zweifach zusammenhängend ausgebildet sein kann oder - ähnlich einem Sprengring - mit einem Schlitz ausgebildet sein könnte, also nur einfach zusammenhängend, so dass er sich leichter in die Vertiefung 21 einsetzen oder aus dieser entfernen läßt. Oder das Distanzelement 26 besteht aus mehreren Teilen, die sich gegenseitig zu einer Ringform ergänzen, also bspw. mehrere ringsegmentförmige Teile. Der Distanzring 26 insgesamt hat vorzugsweise einen rechteckigen Querschnitt; vorzugsweise entspricht dessen Radialerstreckung etwa dem entsprechenden Maß eines Verankerungsabschnitts 27. Das Distanzelement 26 wird vorzugsweise gegen den Grund der Vertiefung 21 gepreßt, damit sich der kragenförmige Bereich 28 und insbesondere die Dichtlippe 29 davon unbehindert bewegen kann.

Wenn ein Teil des Schmiermittels den inneren Dichtungsring 24 überwinden kann, gelangt es zunächst in den Bereich der Kammer 36 und kann von dieser aufgenommen werden. Erst wenn sich die Kammer 36 gefüllt hat, steht das Schmiermittel auch an dem äußeren Dichtring 25 an. Es gibt also einen zeitlich sehr langen Bereich, in welchem die Dichtung 17 insgesamt dicht bleibt, obwohl der innere Dichtring 24 bereits leckt.

Um diesen Zustand rechtzeitig erkennen zu können, ist erfindungsgemäß weiterhin vorgesehen, dass ein Oberflächenbereich zwischen den beiden Anlaufflächen 35, welcher die Kammer 36 begrenzt, wenigstens eine Öffnung 37 zu einem Kanal 38 aufweist, durch den der Innenraum der Kammer 36 zugänglich ist. Dieser Kanal 38 kann bspw. nach außen münden und verschließbar sein, bspw. durch einen Pfropfen. Während einer Wartung kann der Pfropfen abgenommen werden und durch den dadurch geschaffenen Zugang zu der Kammer 36 kann geprüft werden, ob der innere Dichtring 24 bereits leckt, und also Gegenmaßnahmen erforderlich sind, oder nicht. Ferner besteht die Möglichkeit, den Kanal 38 - oder einen Abzweig davon - zu dem inneren Bereich des Spaltes 7 zu führen und dort münden zu lassen, so dass Schmiermittel aus der Kammer 36 - bspw. unter dem Einfluß der Schwerkraft - wieder dem Spaltinnenraum 7 zugeführt wird. Um in umgekehrter Richtung ein Entweichen des Schmiermittels durch einen solchen Kanal 38 vom Spalt 7 in die Kammer 36 zu unterbinden, könnte in dem Kanal 38 bspw. ein Rückschlagventil angeordnet sein, welches bei einem Überdruck vom Spaltinneren 7 zur Kammer 36 hin schließt und nur bei umgekehrten Druckverhältnissen öffnet.

In der Zeichnung ist weiterhin zu sehen, dass der die Vertiefung 21 aufweisende Abschnitt 39 des Außenrings 3 von dessen den nasenförmigen Bund 8 aufweisenden Haupt- oder Mittelabschnitt 40 getrennt ist. Als Trennungsfläche dient eine Teilungsfuge 41, die entlang einer zur Hauptebene des Lagers parallelen Ebene verläuft, und eine rundumlaufende Abstufung 42 aufweist, welche beim Zusammenbau als Zentrierungshilfe dient.

Ferner ist in der Zeichnung zu erkennen, dass der die Vertiefung 21 aufweisende, von dem Haupt- oder Mittelabschnitt 40 des betreffenden Rings - hier des Außenrings 3 - lösbare Ringabschnitt 39 mit kranzförmig verteilt angeordneten Bohrungen 44 versehen ist, welche diesen Ring 39 in zu der Lager-Drehachse paralleler Richtung durchsetzen. Diese kranzförmig verteilt angeordneten Bohrungen 44 erlauben das Hindurchstecken von Befestigungsschrauben, um den betreffenden Ring 2, 3 an einer Maschine, einem Anlagenteil, Chassis, Fundament od. dgl. festlegen zu können. Die betreffende, ebene Anschlußfläche dieses Rings 2, 3 wird eben durch die freie Stirnseite 45 des lösbaren Ringabschnitts 39 gebildet, die von den Bohrungen 44 durchsetzt wird. Um das Hindurchstecken von Befestigungsschrauben zu ermöglichen, fluchten die achsparallelen Bohrungen 44 in dem lösbaren Ringabschnitt 39 mit je einer Bohrung 6 in dem Haupt- oder Mittelabschnitt 40 des betreffenden Rings 2, 3.

Die Vertiefung 21 - und damit die darin aufgenommenen Dichtringe 24, 25 - befinden sich in radialer Richtung zwischen den mit den Bohrungen 6 fluchtenden Bohrungen 44 in dem lösbaren Ringabschnitt 39 und den Bohrungen 6 in dem als Anlauffläche dienenden, zylindrischen Oberflächenbereich 35 des anderen Rings - hier des Innenrings 2.

Nicht dargestellt ist die Möglichkeit, dass an dem äußeren Dichtring 25 - insbesondere im Bereich des dortigen Einschnitts 31 - eine zusätzliche Staubdichtung angeordnet sein könnte, um das Eindringen von Staub oder anderen Partikeln in den Bereich der Dichtung 17 zu unterbinden. Eine ähnliche Wirkung erzeugt eine dritte, äußere Dichtung 43, welche in der Innenseite 20 des Außenrings 3 außerhalb des zweiten Dichtungsrings 25 verankert ist und sich teilweise über die Stirn- bzw. Anschlußfläche 4 des Innenrings 2 erstreckt und dort möglichst staubdicht abschließt.

**Bezugszeichenliste**

| | | | |
|---|---|---|---|
| 1 | Wälzlager | 26 | Distanzelement |
| 2 | Innenring | 27 | Verankerungsabschnitt |
| 3 | Außenring | 28 | kragenförmiger Abschnitt |
| 4 | Stirnseite | 29 | Dichtlippe |
| 5 | Stirnseite | 30 | Einschnitt |
| 6 | Befestigungsbohrung | 31 | Einschnitt |
| 7 | Spalts | 32 | Hypothenuse |
| 8 | Bund | 33 | Flanke |
| 9 | Vertiefung | 34 | Stirnseite |
| 10 | freie Stirnseite | 35 | Oberflächenbereich |
| 11 | Flanke | 36 | Kammer |
| 12 | Laufbahn | 37 | Öffnung |
| 13 | Wälzkörper | 38 | Kanal |
| 14 | Grund | 39 | lösbarer Abschnitt |
| 15 | Flanke | 40 | Hauptabschnitt |
| 16 | Laufbahn | 41 | Teilungsfuge |
| 17 | Dichtung | 42 | Abstufung |
| 18 | Mündung | 43 | dritter Dichtring |
| 19 | Außenseite | 44 | Bohrung |
| 20 | Innenseite | 45 | Anschlußfläche |
| 21 | Vertiefung | | |
| 22 | Grund | | |
| 23 | Flanke | | |
| 24 | erster Dichtring | | |
| 25 | zweiter Dichtring | | |

## Patentansprüche

1. Dichtungsanordnung (17) für ein Wälzlager (1) mit zwei zueinander konzentrischen Ringen (2,3), welche durch einen rundumlaufenden Spalt (7) voneinander beabstandet sind, in welchem eine oder mehrere Reihen von umlaufenden Wälzkörpern (13) angeordnet sind, so dass die beiden Ringe (2,3) um ihre gemeinsame Achse gegeneinander verdrehbar sind, und wobei der Spalt (7) im Bereich wenigstens einer seiner beiden Mündungen (18) abgedichtet ist, wobei im Bereich einer Spaltdichtung (17) wenigstens zwei voneinander getrennte Dichtringe (24,25) vorgesehen sind, mit wenigstens je einer Dichtlippe (29) und je einem Verankerungsabschnitt (27) an einem der Dichtlippe (29) abgewandten Oberflächenbereich des betreffenden Dichtrings (24,25), wobei die Dichtringe (24,25) mit ihren Verankerungsabschnitten (27) an einem gemeinsamen Abschnitt des gleichen Wälzlagerrings (2,3) festgelegt sind, während ihre Dichtlippen (29) jeweils an dem anderen Wälzlagerring (3,2) anliegen, nämlich an Anlaufflächen (35), die zusammen mit wenigstens einer Laufbahn des betreffenden Wälzlagerrings (2,3) durch Bearbeiten oder Formgebung eines gemeinsamen Grundkörpers hergestellt ist, wobei die Querschnittsverläufe der Anlaufflächen (35) für die Dichtlippen (29) wenigstens zweier benachbarter Dichtringe (24,25) gleich oder ähnlich sind sowie weder durch einen Knick noch durch eine Stufe voneinander getrennt, wobei ferner die Verankerungsabschnitte (27) zweier benachbarter Dichtringe (24,25) in einer gemeinsamen Vertiefung (21) eines Wälzlagerrings (2,3), insbesondere in einer Nut oder Auskehlung, aufgenommen sind, **dadurch gekennzeichnet, dass** ein die gemeinsame Vertiefung (21), insbesondere Nut oder Auskehlung, aufweisender Aufnahmeabschnitt (39) eines Wälzlagerrings (2,3)
a) von dem Hauptabschnitt (40) des betreffenden Wälzlagerrings (2,3) lösbar ist,
b) selbst keinerlei Laufbahn aufweist, jedoch
c) an einem ringförmigen Hauptabschnitt (40) des betreffenden Wälzlagerrings festgelegt ist, welcher seinerseits wenigstens eine Laufbahn aufweist, die durch Bearbeiten oder Formgebung eines gemeinsamen Grundkörpers hergestellt ist.

2. Dichtungsanordnung nach einem der Anspruch 1, **dadurch gekennzeichnet, dass** der von dem Hauptabschnitt (40) eines Wälzlagerrings (2,3) lösbare Aufnahmeabschnitt (39) aus einem anderen und/oder aus einem anders behandelten Werkstoff besteht wie der Hauptabschnitt (40) des betreffenden Wälzlagerrings (2,3).

3. Dichtungsanordnung nach einem der Ansprüche 1 oder 2, **dadurch gekennzeichnet, dass** der von dem Hauptabschnitt (40) eines Wälzlagerrings (2,3) lösbare Aufnahmeabschnitt (39) einen etwa L-förmigen Querschnitt aufweist, dessen den Wälzkörpern (13) zugewandte Stirnseite eine kleinere Fläche aufweist als seine den Wälzkörpern (13) abgewandte Stirnseite.

4. Dichtungsanordnung nach Anspruch 3, **dadurch gekennzeichnet, dass** der von dem Hauptabschnitt (40) eines Wälzlagerrings (2,3) lösbare Aufnahmeabschnitt (39) im Bereich seiner den Wälzkörpern abgewandten Stirnseite einen die Stirnseite eines Dichtrings (24,25) übergreifenden, kreisscheibenförmigen Abschnitt aufweist.

5. Dichtungsanordnung nach einem der Ansprüche 1 bis 4, **dadurch gekennzeichnet, dass** zwei benachbarte Dichtringe (24,25) innerhalb der gemeinsamen Vertiefung (21) des Aufnahmeabschnitts (39) durch ein oder mehrere Distanzteile (26) voneinander getrennt sind, wobei vorzugsweise wenigstens ein Distanzteil (26) als Ring oder Ringsegment ausgebildet ist.

6. Dichtungsanordnung nach einem der vorhergehenden Ansprüche, **dadurch gekennzeichnet, dass** die Dichtlippen (29) benachbarter Dichtringe (24,25) an dem selben Wälzlagerring (2,3) unter einem gegenseitigen Abstand anliegen.

7. Dichtungsanordnung nach einem der Ansprüche 5 oder 6, **dadurch gekennzeichnet, dass** zwischen zwei benachbarten Dichtringen (24,25) innerhalb der gemeinsamen Vertiefung (21) oder zwischen den beiden Anlaufflächen (35) für die Dichtlippen (29) wenigstens ein Kanal (38) mündet (37), vorzugsweise eine Bohrung.

8. Dichtungsanordnung nach einem der vorhergehenden Ansprüche, **dadurch gekennzeichnet, dass** ein, vorzugsweise zwei benachbarte Dichtringe (24,25) einer gemeinsamen Spaltdichtung (17) beide derart eingebaut sind, dass ein innerer Überdruck von seinem (ihren) den Wälzkörpern (13) zugewandten Stirnseite(n) her die Dichtlippen (29) zusätzlich an die betreffende Anlauffläche (35) presst.

9. Dichtungsanordnung nach Anspruch 8, **dadurch gekennzeichnet, dass** wenigstens ein, vorzugsweise wenigstens zwei Dichtringe (24,25) einer gemeinsamen Spaltdichtung (17) in seinem (ihren) Querschnitt(en) (je) eine Aufnahmetasche aufweist (-en), welche sich in Richtung zu den Wälzkörpern (13) hin öffnen.

10. Dichtungsanordnung nach einem der Ansprüche 8 oder 9, **dadurch gekennzeichnet, dass** die Dichtlippe (29) eines Dichtrings (24,25) an der freien Kante eines etwa kragenartigen und/oder konischen Abschnitts (28) des Dichtrings (24,25) angeordnet ist.

11. Dichtungsanordnung nach Anspruch 10, **dadurch gekennzeichnet, dass** ein Dichtring (24,25) derart eingebaut ist, dass der kragenartige Abschnitt (28) des Dichtrings (24,25) querschnittlich nicht lotrecht zu der betreffenden Anlauffläche (35) verläuft, sondern dem äußeren, nicht abgedichteten Bereich der Anlauffläche (35) angenähert verläuft.

12. Dichtungsanordnung nach einem der Ansprüche 10 oder 11, **dadurch gekennzeichnet, dass** der kragenartige Abschnitt (28) eines Dichtrings (24,25) mit dessen Verankerungsabschnitt (27) verbunden ist, und zwar im Bereich der außerhalb des abgedichteten Spaltbereichs (7) liegenden Stirnfläche (34) dieses Verankerungsabschnitts (27).

13. Dichtungsanordnung nach einem der vorhergehenden Ansprüche, **dadurch gekennzeichnet, dass** wenigstens ein, vorzugsweise wenigstens zwei Dichtring(e) (24,25) einer gemeinsamen Spaltdichtung (17) beide ein Spannmittel aufweist (-en), um die betreffende Dichtlippe (29) fest an die betreffende Anlauffläche (35) zu pressen, bspw. einen rundum laufenden Spanndraht oder eine rundum laufende Spannfeder, insbesondere einen rundum laufender Spanndraht oder eine rundum laufende Spannfeder mit einer Länge, die gleich oder größer ist als der Durchmesser eines Wälzkörpers (13), multipliziert mit der Anzahl der Wälzkörper (13) in der betreffenden Reihe.

14. Dichtungsanordnung nach einem der vorhergehenden Ansprüche, **dadurch gekennzeichnet, dass** zwei benachbarte Dichtringe (24,25) einer gemeinsamen Spaltdichtung (17) den gleichen Querschnitt aufweisen, beispielsweise identisch sind, wobei vorzugsweise die Querschnittsverläufe der Anlaufflächen (35) für die Dichtlippen (29) benachbarter Dichtringe (24,25) die selbe axiale Steigung aufweisen, insbesondere in einer gemeinsamen axialen Flucht liegen, und/oder wobei vorzugsweise die Dichtlippen (29) zweier benachbarter Dichtringe (24,25) an einem gemeinsamen, zylindrischen Oberflächenbereich (35) anliegen oder anlaufen, der einen konstanten Durchmesser aufweist.

## Claims

1. A sealing assembly (17) for a rolling bearing (1) with two mutually concentric rings (2,3) spaced apart from each other by a fully circumferential gap (7) in which one or more rows of circulating rolling elements (13) are arranged, so that the two rings (2,3) are rotatable relative to each other about their common axis, and wherein the gap (7) is sealed in the region of at least one of its two mouths (18), wherein in the region of a gap seal (17), there are provided at least two mutually sparated seal rings (24,25), each comprising at least one sealing lip (29) and an anchoring portion (27) on a surface region of the particular seal ring (24, 25) that faces away from the sealing lip (29), wherein the seal rings (24,25) are fixed by their anchoring portions (27) to a common portion of the same rolling bearing ring (2,3), while their sealing lips (29) each bear against the other rolling bearing ring (3,2), namely against thrust surfaces (35) produced together with at least one raceway of the particular rolling bearing ring (2,3) by machining or shaping of a common base body, wherein the cross-sectional shapes of the thrust surfaces (35) for the sealing lips (29) of at least two adjacent seal rings (24,25) are identical or similar and are not separated from each other by a bend or a step, wherein furthermore the anchoring portions (27) of two adjacent seal rings (24,25) are received in a common depression (21) of a rolling bearing ring (2,3), particularly in a groove or recess, **characterized in that** a receiving portion (39) of a rolling bearing ring (2,3) having the common depression (21), particularly a groove or recess,
a) is detachable from a main portion (40) of the particular rolling bearing ring (2,3),
b) does not comprise any raceway itself, but
c) is fixed to an annular main portion (40) of the particular rolling bearing ring, which in turn comprises at least one raceway, which is produced by machining or shaping of a common base body.

2. Sealing assembly according to claim 1, **characterized in that** the receiving portion (39) detachable from the main portion (40) of a rolling bearing ring (2,3) comprises a material different from and/or a differently treated than the main portion (40) of the rolling bearing (2,3).

3. Sealing assembly according to one of claims 1 or 2, **characterized in that** the receiving portion (39) detachable from the main portion (40) of the rolling bearing ring (2,3) has a generally L-shaped cross section whose end face facing towards the rolling elements (13) has a smaller area than its end face facing away from the rolling elements (13).

4. Sealing assembly according to claim 3, **characterized in that** the receiving portion (39) detachable from the main portion (40) of a rolling bearing ring (2,3) has, in the region of its end face facing away from the rolling elements, a circular disk-shaped portion that overlaps the end face of one of said seal ring (24,25).

5. Sealing assembly according to one of claims 1 to 4, **characterized in that** two adjacent seal rings (24,25) are separated from each other, within the common depression (21) of the receiving portion (39), by one or more spacers (26), wherein at least one of said spacers (26) is configured as a ring or ring segment.

6. Sealing assembly according to one of the preceding claims, **characterized in that** the sealing lips (29) of adjacent seal rings (24,25) bear against the same rolling bearing ring (2,3) in spaced relation.

7. Sealing assembly according to one of claims 5 or 6, **characterized in that** at least one conduit (38), preferably a bore, opens (37) between two adjacent seal rings (24,25) in the common depression (21) or between the two thrust surfaces (35) for said sealing lips (29).

8. Sealing assembly according to one of the preceding claims, **characterized in that** one or preferably two adjacent seal rings (24,25) of a common gap seal (17) are both mounted such that an internal overpressure from its (their) respective end faces facing the rolling elements (13) presses the sealing lips (29) additionally against the particular thrust surface (35).

9. Sealing assembly according to claim 8, **characterized in that** at least one, preferably at least two of the seal rings (24,25) of a common gap seal (17) comprises (comprise) in its (their) respective cross section(s) a receiving pocket that opens in the direction of the rolling elements (13).

10. Sealing assembly according to one of claims 8 or 9, **characterized in that** the sealing lip (29) of a seal ring (24,25) is disposed at a free edge of a generally collar-shaped and/or conical portion (28) of the seal ring (24,25).

11. Sealing assembly according to claim 10, **characterized in that** the seal ring (24,25) is integrated such that the collar-shaped portion (28) of the seal ring (24,25) does not extend in cross section perpendicular to the particular thrust surface (35), but extends in closer proximity to the other, unsealed region of the thrust surface (35).

12. Sealing assembly according to claim 10 or 11, **characterized in that** the collar-shaped portion (28) of a seal ring (24,25) is connected to an anchoring portion (27) of the latter, namely in the region of an end face (34) of said anchoring portion (27) beyond the sealed gap area (7).

13. Sealing assembly according to one of the preceding claims, **characterized in that** at least one, preferably at least two two seal ring(s) (24,25) of a common gap seal (17) both comprise a tension means for pressing the regarding sealing lip (29) firmly against the regarding thrust surface (35), for example a fully circumferential tension wire, or a fully circumferential tension spring, or a fully circumferential tension wire or a fully circumferential tension spring with a length that is equal to or greater than the diameter of a rolling element (13), multiplied by the number of rolling elements (13) in a particular row.

14. Sealing assembly according to one of the preceding claims, **characterized in that** two adjacent seal rings (24,25) of a common gap seal (17) have identical cross sections, for example are identical, wherein preferably the cross-sectional shapes of the thrust surfaces (35) for the sealing lips (29) of adjacent seal rings (24,25) are provided with the same axial inclination, especially are in mutual axial alignment, and/or wherein preferably the sealing lips (29) of two adjacent seal rings (24,25) bear or thrust against a common cylindrical thrust surface (35) having a constant diameter.

## Revendications

1. Ensemble d'étanchéité (17) pour un palier à roulement (1) comprenant deux bagues concentriques (2, 3), écartées l'une de l'autre par une fente périphérique (7) dans laquelle sont disposées une ou plusieurs rangées de corps de roulement rotatifs (13) de telle sorte que les deux bagues (2, 3) puissent être tournées l'une par rapport à l'autre autour de leur axe commun, et en ce que la fente (7) est rendue étanche au niveau d'au moins l'une de ses deux ouvertures (18), en ce qu'au moins deux bagues d'étanchéité distinctes l'une de l'autre (24, 25) sont prévues au niveau d'un joint de fente (17), présentant chacune au moins une lèvre d'étanchéité (29) et chacune un segment d'ancrage (27) sur une zone superficielle opposée à la lèvre d'étanchéité (29) de la bague d'étanchéité (24, 25) en question, en ce que les bagues d'étanchéité (24, 25) sont fixées au moyen de leurs segments d'ancrage (27) sur un segment commun de la même bague de palier à roulement (2, 3) alors que leurs lèvres d'étanchéité (29) sont placées chacune sur l'autre bague du palier à roulement (3, 2), à savoir sur des surfaces de butée (35) présentant au moins un chemin de roulement de la bague de palier à roulement (2, 3) en question qui est réalisé par usinage ou formage d'un corps de base commun, en ce que les profils des sections transversales des surfaces de butée (35) pour les lèvres d'étanchéité (29) d'au moins deux bagues d'étanchéité adjacentes (24, 25) sont identiques ou analogues et qu'elles ne sont séparées l'une de l'autre ni par un coude ni par un étage, en ce qu'en outre les segments d'ancrage (27) des deux bagues d'étanchéité (24, 25) adjacentes sont logés dans une cavité commune (21) d'une bague de palier à roulement (2, 3), en particulier dans une rainure ou gorge, **caractérisé en ce qu'**un segment récepteur (39) présentant la cavité commune (21), en particulier une rainure ou gorge, d'une bague de palier à roulement (2, 3)
a) est désolidarisable du segment principal (40) de la bague de palier à roulement (2, 3) en question,
b) ne présente lui-même aucun chemin de roulement, toutefois
c) est fixé sur un segment principal (40) annulaire de la bague de palier à roulement en question, laquelle présente au moins pour sa part un chemin de roulement qui est réalisé par usinage ou formage d'un corps de base commun.

2. Ensemble d'étanchéité selon la revendication 1, **caractérisé en ce que** le segment récepteur (39) désolidarisable du segment principal (40) d'une bague de palier à roulement (2, 3) est constitué d'un autre et/ou d'un matériau traité différemment que le segment principal (40) de la bague de palier à roulement (2, 3) en question.

3. Ensemble d'étanchéité selon l'une des revendications 1 ou 2, **caractérisé en ce que** le segment récepteur (39) désolidarisable du segment principal (40) d'une bague de palier à roulement (2, 3) présente une section transversale approximativement en forme de L, dont la face frontale tournée vers les corps de roulement (13) présente une plus petite surface que sa face frontale opposée aux corps de roulement (13).

4. Ensemble d'étanchéité selon la revendication 3, **caractérisé en ce que** le segment récepteur (39) désolidarisable du segment principal (40) d'une bague de palier à roulement (2, 3) présente au niveau de sa face frontale opposée aux corps de roulements un segment circulaire, chevauchant la face frontale d'une bague d'étanchéité (24, 25).

5. Ensemble d'étanchéité selon l'une des revendications 1 à 4, **caractérisé en ce que** deux bagues d'étanchéité (24, 25) adjacentes sont séparées l'une de l'autre à l'intérieur de la cavité commune (21) du segment récepteur (39) par une ou plusieurs pièces intercalaires (26), de préférence au moins une pièce intercalaire (26) étant réalisée sous forme de bague ou de segment de bague.

6. Ensemble d'étanchéité selon l'une des revendications précédentes, **caractérisé en ce que** les lèvres d'étanchéité (29) des bagues d'étanchéité (24, 25) adjacentes sont placées sur la même bague de palier à roulement (2, 3) à une distance réciproque.

7. Ensemble d'étanchéité selon l'une des revendications 5 ou 6, **caractérisé en ce qu'**entre deux bagues d'étanchéité (24, 25) adjacentes à l'intérieur de la cavité commune (21) ou entre les deux surfaces de butée (35) pour les lèvres d'étanchéité (29) débouche (37) au moins un canal (38), de préférence un alésage.

8. Ensemble d'étanchéité selon l'une des revendications précédentes, **caractérisé en ce qu'**une, de préférence deux bagues d'étanchéité (24, 25) adjacentes d'un joint de fente (17) commun sont l'une comme l'autre intégrées de telle sorte qu'une surpression interne à partir de sa (leurs) face(s) frontale(s) tournée(s) vers les corps de roulement (13) presse en plus les lèvres d'étanchéité (29) sur la surface de butée (35) en question.

9. Ensemble d'étanchéité selon la revendication 8, **caractérisé en ce qu'**au moins une, de préférence au moins deux bagues d'étanchéité (24, 25) d'un joint de fente (17) commun présente(nt) dans sa (leurs) section(s) transversale(s) (chacune) une poche de réception qui s'ouvre vers les corps de roulement (13).

10. Ensemble d'étanchéité selon l'une des revendications 8 ou 9, **caractérisé en ce que** la lèvre d'étanchéité (29) d'une bague d'étanchéité (24, 25) est disposée sur le bord libre d'un segment (28) approximativement en forme de collerette et/ou conique de la bague d'étanchéité (24, 25).

11. Ensemble d'étanchéité selon la revendication 10, **caractérisé en ce qu'**une bague d'étanchéité (24, 25) est intégrée de telle sorte que le segment (28) en forme de collerette de la bague d'étanchéité (24, 25) ne soit transversalement pas perpendiculaire à la surface de butée (35) en question, mais se rapproche de la zone externe, non étanchéifiée de la surface de butée (35).

12. Ensemble d'étanchéité selon l'une des revendications 10 ou 11, **caractérisé en ce que** le segment (28) en forme de collerette d'une bague d'étanchéité (24, 25) est relié à son segment d'ancrage (27), à savoir dans la zone de la face frontale (34) qui est à l'extérieur de la zone de fente (7) étanchéifiée de ce segment d'ancrage (27).

13. Ensemble d'étanchéité selon l'une des revendications précédentes, **caractérisé en ce qu'**au moins une, de préférence au moins deux bagues d'étanchéité (24, 25) d'un joint de fente (17) commun présente(nt) l'une comme l'autre un moyen de serrage pour assujettir la lèvre d'étanchéité (29) en question à la surface de butée (35) en question, par exemple un fil de tension périphérique ou un ressort tendeur périphérique, en particulier un fil de tension périphérique ou un ressort tendeur périphérique d'une longueur qui est égale ou supérieure au diamètre d'un corps de roulement (13), multiplié par le nombre de corps de roulement (13) dans la rangée en question.

14. Ensemble d'étanchéité selon l'une des revendications précédentes, **caractérisé en ce que** deux bagues d'étanchéité (24, 25) adjacentes d'un joint de fente (17) commun présentent la même section transversale, sont identiques par exemple, **en ce que** de préférence les profils des sections transversales des surfaces de butée (35) pour les lèvres d'étanchéité (29) des bagues d'étanchéité (24, 25) adjacentes présentent le même pas axial, en particulier se situent dans un alignement axial commun, et/ou de préférence les lèvres d'étanchéité (29) des deux bagues d'étanchéité (24, 25) adjacentes étant alignées ou butant sur une zone superficielle (35) commune cylindrique qui présente un diamètre constant.
